(19)

Europäisches
Patentamt
European
Patent Office
Office européen
des brevets

(11)     **EP 2 069 757 B1**

(12)                    **EUROPEAN PATENT SPECIFICATION**

(45) Date of publication and mention
of the grant of the patent:
**28.12.2011 Bulletin 2011/52**

(21) Application number: **07823937.3**

(22) Date of filing: **26.09.2007**

(51) Int Cl.:
***G01N 19/02*** *(2006.01)*

(86) International application number:
**PCT/GB2007/003675**

(87) International publication number:
**WO 2008/038001 (03.04.2008 Gazette 2008/14)**

(54) **MONITORING APPARATUS**

ÜBERWACHUNGSVORRICHTUNG

APPAREIL DE SURVEILLANCE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.09.2006 GB 0618935
30.05.2007 GB 0710316**

(43) Date of publication of application:
**17.06.2009 Bulletin 2009/25**

(73) Proprietor: **Surface Control Limited
Staines, Middlesex TW18 1XB (GB)**

(72) Inventors:
• **COLLINS, Mark
Sussex TN19 7JT (GB)**
• **BUNTING, David Robert
Hertfordshire WD5 0QS (GB)**

(74) Representative: **Hutchins, Michael Richard et al
M.R. Hutchins & Co
The Warehouse
1 Draper Street
Southborough
Tunbridge Wells, Kent TN4 0PG (GB)**

(56) References cited:
**AU-B2- 560 050      US-A- 3 828 605
US-A- 4 081 989      US-A- 4 813 266
US-A- 4 895 015      US-A- 5 195 357**

• **KEITH R ANDREW ET AL: "Measurement of
energy loss profiles during short duration sliding
contacts: a computer-compatible instrument
based on the British Pendulum Skid Tester"
MEASUREMENT SCIENCE AND TECHNOLOGY,
INSTITUTE OF PHYSICS PUBLISHING, BRISTOL,
GB, vol. 9, no. 9, 1 September 1998 (1998-09-01),
pages 1566-1570, XP020064599 ISSN: 0957-0233**

Printed by Jouve, 75001 PARIS (FR)

## Description

This invention relates to a device for determining the slip resistance of a surface, more particularly, the invention relates to a device for determining the slip resistance of a floor surface.

## Background of the Invention

According to the UK Health & Safety Executive's own statistics, slips, trips and falls on level ground consistently count for around 1 in 3 major injuries, and for over 1 in 5 injuries in workplace areas throughout Great Britain that result in a 3 day absence from work. The HSE statistics indicate that there are at least 35,000 injuries per annum due to slips, trips and falls and suggest that the majority of these accidents are slips.

Various factors contribute to slipping accidents, and the HSE have identified six factors considered to be of particular importance:

- The nature of the floor

- Contamination of the floor

- Footwear considerations

- Pedestrian factors

- Cleaning

- Environment

The Workplace, (Health, Safety and Welfare) Regulations, 1992, require that floors must not be slippery, so as to expose any person to a risk to their safety. Methods have been developed for testing the inherent slipperiness of a floor surface, and two methods of measuring the slipperiness of a floor are referred to in HSE publications. These are the 'pendulum Coefficient of Friction (CoF) test; and a surface micro-roughness meter test.

The pendulum coefficient of friction test is now the subject of a British Standard, BS 7976. The pendulum test instrument (TRL Pendulum Tester) uses an arm with a rubber shoe mounted on the end that swings from a fixed height. The contact arc chord length and depth are carefully controlled. The shoe is raised vertically against a spring that controls the pressure on the floor. Frictional engagement with the floor results in a loss of momentum and consequently so the swinging arm rises to a lower height at the end of the swing. A scale converts the reduced height into a coefficient of friction measurement. A modified version of the British pendulum tester is described in the article by K. Andrew and A. Cunningham in Measurement Science and Technology, 9, (1998), 1566-1570 (XP20064599). Although the pendulum instrument is considered to provide an accurate assessment of the slipperiness of a floor in both dry and contaminated (e.g. wet conditions), it suffers from the drawback that it requires a skilled operative both to use it and to interpret the results. Moreover, according to the HSE, the pendulum meter is currently the only portable instrument that accurately simulates the action of a foot slipping on a wet floor.

The slipperiness of a floor may also be gauged by measuring the surface roughness of a flooring material. A number of types of roughness tests exist (see the HSE publication: 'The assessment of pedestrian slip risk' published by the Health and Safety Executive 10/04) and such methods, in theory, give a good indicator of floor slip resistance.

The surface micro-roughness meters measure a parameter known as the 'Rz' parameter which is calculated as the mean value of several peak-to valley measurements on the floor surface. According to the HSE, in most circumstances, both pendulum CoF and surface micro-roughness readings are required to give an accurate indicator of the slipperiness of a floor surface. The HSE classification of slip risk, based on pendulum measurements, classifies pendulum values of 0-24 as high risk, values of 25-35 as moderate risk, values of 36 - 64 as low risk and values of 65+ as extremely low risk. The classification for Rz surface roughness (microns) states that a surface roughness of below 10 microns is classified as providing a high potential for slip, a surface roughness between 10 and 20 microns is classified as providing a moderate potential for slip, whereas a surface roughness of 20 or above is stated to provide a low potential for slip.

A major problem with the methods and instruments currently available for measuring the slipperiness of a floor is that, in practice, they require near laboratory conditions, and require setting up and data interpretation by skilled personnel. They are therefore not suitable for routine use and regular floor monitoring in an average work environment such as a supermarket where the condition of the floor, and hence its slipperiness, will typically fluctuate considerably, i.e. through changes in the type and extent of contamination of the floor, alteration of the floor substrate, changes in the cleaning personnel, change in the staff using the test equipment and poor statistical record monitoring. Therefore, at present, there remains a need for an apparatus that is simple to set up and use and which can be used by unskilled staff, i.e. staff that have little or no knowledge or understanding of slip causes or staff with only a minimum of training, to determine whether or not a floor is safe for the public to walk over.

## Summary of the Invention

The present invention sets out to provide an apparatus for monitoring the condition of a floor that is quick and simple to set up and use and can be used by staff with a minimum of training.

The invention provides a device for measuring the dynamic coefficient of friction of a surface, the device comprising;

a track having an arcuate portion which is shaped to mimic an arc of travel of a pendulum;

a shoe mounted so as to be movable along the track, and means for biasing part of the shoe into contact with the surface as it moves along the arcuate portion of the track;

means for providing an initial propulsion force to propel the shoe along the track;

means for measuring the velocity of the shoe at a plurality of points during its travel along the track; and

computing means for calculating the coefficient of friction from changes in velocity of the shoe as it moves along the track.

The shoe is mounted so as to be movable along the track. It may, for example, be mounted on a carriage that is slidably mounted on the track

The arcuate track is shaped to mimic an arc of travel of a pendulum, i.e. the track is bowed in a downwards direction. The arcuate track can be formed by a rail or pair of substantially parallel rails upon which is mounted a carriage that carries the shoe. The carriage may be provided with one or more rollers or pairs of rollers that engage the track and allow the carriage to move along the track. The arcuate track may have a substantially horizontal portion of track adjoining one or both ends thereof.

The device comprises means for providing an initial propulsion force to propel the shoe along the track. The means for providing the initial propulsion force is typically configured so that it imparts an accelerating force to the shoe (or carriage carrying the shoe) up to but not beyond the start of the arcuate portion of the track. Once the accelerating force is removed, the shoe (or carriage) will gradually lose velocity as it moves along the arcuate portion of the track as a consequence of frictional engagement with the underlying surface. The velocity of the shoe (or carriage) is measured by a plurality (e.g. two or more, for example three or more, and in particular three) of measuring devices and the reduction in velocity is determined. Since the rate of deceleration of the shoe is dependent on the friction between the shoe and the underlying surface, the rate of deceleration can be used to calculate the dynamic coefficient of friction of the surface.

The measuring devices can comprise electromagnetic radiation sensors and associated electromagnetic radiation emitters. For example, each measuring device can comprise a device for emitting and forming a beam of infra red or ultraviolet radiation or visible light and a sensor to detect the said beam. The emitting device and sensor are positioned so that the beam is directed across the track. Movement of the shoe or carriage carrying the shoe is then detected by virtue of the shoe or carriage passing through and breaking the beam. At least two emitter/sensor couples are disposed along the track and the time taken for the shoe or carriage to break each successive beam provides a means of measuring the velocity of the shoe or carriage as it moves along the track.

The means for providing an initial propulsion force can take a number of different forms. For example, it could be a solenoid-driven or hydraulic ram or plunger. Preferably, however, it comprises a spring which is compressed and then released.

In one preferred embodiment, the means for providing an initial propulsion force comprises a compressible spring, a mechanism for compressing the spring, a latch for holding the spring in a compressed state, and release means for releasing the latch to allow the spring to decompress.

In order to ensure that part of the shoe remains in contact with the surface as it travels along the arcuate portion of the track, a biasing means is provided for biasing the shoe against the surface. The biasing means typically takes the form of a biasing spring.

The part of the shoe that is biased into contact with the surface may be formed from any one of a variety of materials such as rubber or leather. More typically, the shoe is formed of rubber, and most preferably a 4S grade of rubber as defined herein.

The device may be calibrated using a pendulum tester, e.g. a TRL pendulum tester, in which case the arcuate portion of the track has a radius of curvature corresponding to the radius of the path followed by the pendulum in the pendulum tester. Calibration may be achieved using the methods described below.

In another aspect, the invention provides a method of measuring the dynamic coefficient of friction of a surface using a device as described in herein; wherein the method comprises;

positioning the device on the surface;

imparting an initial propulsion force to the shoe to propel the shoe along the track;

measuring the velocity of the shoe at a plurality of points during its travel along the track; and

calculating the coefficient of friction from changes in velocity of the shoe as it moves along the track.

The device may form part of an apparatus for determining the slip resistance of a floor surface at a plurality of locations on the floor surface as defined in claim 10

Thus, the apparatus of the invention may comprise means for measuring two or more physical properties of the floor surface relevant to slip resistance at each location, one of the said physical properties being the dynamic coefficient of friction of the surface, and the other one or more other physical properties being selected from:

a) the micro-profile of the floor surface, and

b) the reflectance of the surface.

In one embodiment, the apparatus comprises: (i) a device for measuring the dynamic coefficient of friction of the floor surface as hereinbefore defined; (ii) means for measuring the micro-profile of the floor surface; and (iii) optionally means for measuring the reflectance of the surface.

In a further embodiment, the apparatus comprises: - (i) a device for measuring the dynamic coefficient of friction of the floor surface as hereinbefore defined; (ii) means for measuring the reflectance of the surface; (iii) optionally means for measuring the micro-profile of the floor surface.

In a preferred embodiment, the apparatus comprises: - (i) a device for measuring the dynamic coefficient of friction of the floor surface as hereinbefore defined; (ii) means for measuring the reflectance of the surface; (iii) means for measuring the micro-profile of the floor surface.

The micro-profile of the floor surface can be measured by means of a micron profile meter. Diamond stylus micron profile meters are commercially available and comprise a diamond tipped stylus (e.g. a 2 $\mu$m diamond stylus) that is in physical contact with the surface and tracks along the along the surface recording micro-undulations of the surface.

As an alternative to the diamond stylus profile meter, an optical (and hence noncontact) method can be employed in which the peaks and troughs of the surface are detected by scanning a light along the surface for a predetermined distance.

The reflectance of the surface may be measured using a gloss meter. Gloss meters are available commercially and operate by directing light of a predetermined strength onto the surface, and measuring the amount of light reflected back from the surface.

The data processor is programmed to compare measured values for each of the physical properties of the floor surface at each location with comparison data which can, for example, comprise historical data consisting of previously measured values for each location or/and as a reference standard when setting up the first inspection.

The location device is preferably one which is capable of determining the position of the apparatus to an accuracy of within about 5 metres, more preferably within about 4 metres, for example within about 3 metres, and most preferably within about 2 metres. The location device may be provided with a transceiver, and the location of the device may be determined by communication with one or more external transceivers positioned at fixed, known locations relative to the apparatus. For example, where the apparatus is intended for use in a supermarket or department store or other shop, a plurality of transceivers may be positioned at fixed location around the supermarket, store or shop, communication between the external transceivers and the transceiver in the location device serving to establish the location of the apparatus.

Whereas the various component parts of the apparatus can be spatially separated (e.g. the data processor and/or the output device could be remote devices communicating by, for example, radio waves, to the location device and measuring means), it is preferred that the means for measuring one or more physical properties of the floor surface, data processor, output device, and location device (other than any external transceivers) when present, are all mounted in or on a common housing.

The apparatus may have only one output device, or may have a plurality of output devices.

Each output device is operatively linked to the data processor and informs a user of the apparatus whether the slip resistance of the floor at a given location is within acceptable limits. Information regarding the slip resistance can be imparted to the user in a variety of ways. For example, the output device can comprise one or more visual or audio elements for indicating whether the slip resistance of the floor at a given location is within acceptable limits.

In one embodiment, an output device is provided which comprises one or more lights that light up to indicate whether the slip resistance of the floor at a given location is within acceptable limits.

Slip Risk Classification

| | |
|---|---|
| 0-24 | High |
| 25-35 | Moderate |
| 36-64 | Low |
| 65+ | Extremely low |

The lights may comprise green and red indicator lights, the green light indicating that the slip resistance of the floor at a given location is within acceptable limits and the red light indicating that the slip resistance of the floor at a given location is not within acceptable limits.

Alternatively or additionally, an output device may be present which provides an alphanumeric visual display. The alphanumeric visual display can be provided by, for example, a screen or a printer or both.

In one preferred embodiment, an output device is present which provides a print out informing the user of the slip resistance of the floor.

The output devices typically provide information which informs the user whether or not the floor meets a predetermined slip resistance requirement without the requirement for the user to carry out complex calculations and without the need for any particular skill or experience on the part of the user. For example, the output device may provide an index number or letter indicative of the state of the floor so that the user can see, either straightaway or by reference to a simple key or chart, whether the floor requires attention. In one embodiment, the output device may also provide information as to what type of remedial action is required. It will be appreciated therefore that the apparatus may be used by an unskilled or semi-skilled operative.

In another aspect, the invention provides an apparatus for determining the slip resistance of a floor surface at a plurality of locations on the floor surface as defined in claim 10

The apparatus preferably comprises a location device as hereinbefore defined for identifying and recording the location of the apparatus.

In a still further aspect, the invention provides a method of monitoring the slip resistance of a floor surface at one or more locations on the floor surface, which method comprises using an apparatus as hereinbefore defined to:

(a) measure the dynamic coefficient of friction of a surface and one or more other physical properties of the floor surface relevant to slip resistance at each location;

(b) compare measured values for each of the said physical properties of the floor surface at each location with comparison data; and

(c) inform a user of the apparatus whether the slip resistance of the floor at a given location is within acceptable limits.

Further aspects and embodiments of the invention are as set out below and as defined in the claims.

## Brief Description of the Drawings

Figure 1 is a schematic diagram illustrating the mode of action of a conventional pendulum apparatus for measuring the coefficient of friction of a floor surface. The pendulum apparatus does not form part of the invention.

Figure 2 is a schematic partial view from below of an apparatus for measuring the coefficient of friction of an underlying surface according to one embodiment of the invention.

Figure 3 is a schematic side view of the apparatus of Figure 2.

Figure 4 is an isometric view of an apparatus according to another embodiment of the invention.

Figure 5 is a side sectional elevation of the apparatus of Figure 4 showing a shoe- supporting carriage in mid movement along the track

Figure 5A is a sectional elevation along line A-A in Figure 5.

Figure 6 is a side sectional elevation of the apparatus shown in Figure 5 with the carriage in the latched primed position.

Figure 6A is a sectional elevation along line A-A in Figure 6.

Figure 7 is a side sectional elevation of the apparatus shown in Figure 5 showing the position of the carriage shortly after release of the latch.

Figure 7A is a sectional elevation along line A-A in Figure 7.

Figure 8 is a side sectional elevation of the apparatus shown in Figure 5 showing the carriage at the end of its travel following release of the latch.

Figure 8A is a sectional elevation along line A-A in Figure 8.

Figure 9A is a side sectional elevation of the apparatus shown in Figure 5 with the lever arm in a raised position.

Figure 9B is a side sectional elevation of the apparatus shown in Figure 5 with the lever arm in a partially lowered position and the compression spring lightly compressed.

Figure 9C is a side sectional elevation of the apparatus shown in Figure 5 with the lever arm in a fully lowered position and the compression spring fully compressed.

## Detailed Description of the Invention

The invention will now be illustrated, but not limited, by reference to the specific embodiment shown in the accompanying drawings.

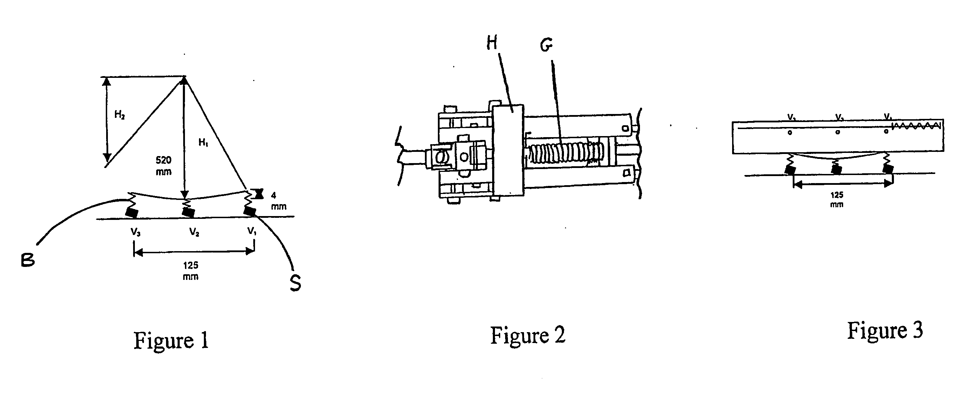

The TRL Pendulum Tester method, which represents the currently approved method of measuring the Coefficient of Friction of floor surfaces, is illustrated schematically in Figure 1. The pendulum tester uses a swinging pendulum arm with a rubber shoe S mounted on its end. The rubber shoe is formed from 4S rubber ("standard simulated shoe sole"), a grade of rubber developed by the UK Health and Safety Laboratory (HSL) and the UK Slip Resistance Group (UKSRG). The contact arc chord length and depth are carefully controlled using adjustment screws (not shown) on the base of the pendulum tester. As shown in Figure 1, a typical chord length used in the test is a length of 125 mm. The rubber shoe S is raised vertically against a spring B that controls the pressure on the floor. The pendulum is released from a defined starting height so that it swings down bringing the shoe S into contact with the floor surface. Friction between the shoe S and the floor results in a loss of momentum and so the swinging arm rises to a lower height at the end of the swing. A scale converts this reduced height into a coefficient of friction measurement.

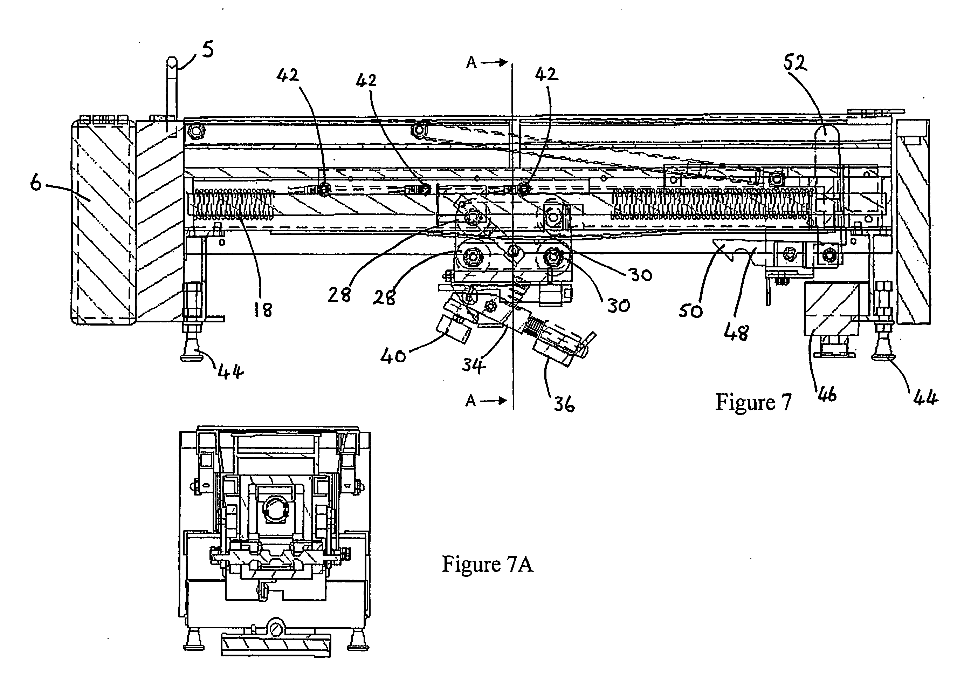

An apparatus according to the invention is shown in Figures 2 to 9C. The apparatus provides a more compact and portable alternative to the standard TRL pendulum tester. The apparatus of the invention replicates the behaviour of the pendulum by using a compressed spring G to provide the equivalent potential energy of the pendulum when raised to its starting position.

As shown schematically in Figures 2 and 3, when the force of the compressed spring G is released, it urges a carriage bearing a rubber shoe H along a track I with the same shape as the swing of the pendulum over the distance where the shoe is in contact with the floor. Frictional forces on the shoe slow it down as it passes over the floor surface. The apparatus measures the speed of the shoe at multiple points ($V_1$, $V_2$ & $V_3$) during its travel and from these measurements computes the equivalent pendulum measurement and hence the coefficient of friction of the surface under test.

The following is a simplified description of the measurement equations that neglects a number of effects for simplicity. The potential energy (PE) of the pendulum device is given by

$$PE = m.g.h_1$$

where m is the mass in kilograms
g is the acceleration due to gravity, approximately 9.81 m.s$^{-2}$
$h_1$ is the initial height in metres

The potential energy is converted to kinetic energy (KE) that is maximum at the lowest point of travel.

$$KE_1 = \frac{1}{2}.m.v_1^2$$

The effect of friction reduces the Kinetic Energy so that the pendulum rises to a lower height at the end of its swing. The potential energy at this point is

$$PE_2 = m.g.h_2$$

The height $h_2$ is effectively measured by the pointer on the pendulum that records the maximum height reached.

If the pendulum were released from the height $h_2$, this would result in a Kinetic Energy

$$KE_2 = \frac{1}{2}.m.v_2^2$$

The difference between the initial height and the final height is primarily due to the loss of energy to friction. We can set the equations equal

$$PE_1 = KE_1 \quad \text{and} \quad PE_2 = KE_2$$

.

But we can calculate the loss of Potential Energy as $PE_1 - PE_2$ and therefore

$$PE_1 - PE_2 = KE_1 - KE_2$$

The coefficient of friction indicated by the pendulum device can be simply measured as a function (F) of the height difference $h_1 - h_2$, this being indicated on the scale of the machine. The function F is a easily calculated from the geometry of the pendulum machine based on the angle of deflection of the machine's pointer.

So the Coefficient of Friction, COF = $F(h_1 - h_2)$

By transposing the equations above and removing common terms we get

$$2g\,(h_1 - h_2) = v_1^2 - v_2^2$$

and therefore

$$COF = F((v_1^2 - v_2^2)/2g)$$

It can therefore be seen that by measuring the changes in velocity and relating that difference to the calibration data measured from the pendulum the coefficient of friction can be determined to give the same result as would have been given by the pendulum for the same surface.

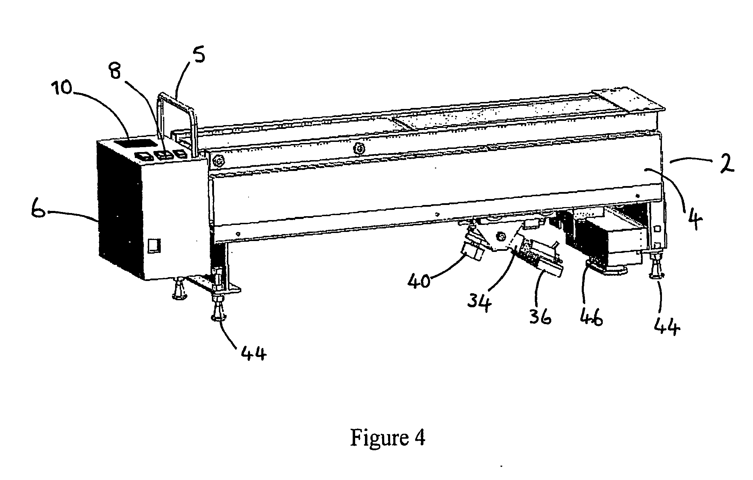

An apparatus embodying the principles set out above is illustrated in Figures 4 to 9C. As shown in Figure 4, the apparatus comprises a housing 2 with removable side panels 4 that conceal the moving parts of the apparatus.

Mounted on one end of the support frame is a box 6 that contains a data processor (not shown) and the electronic controls (not shown) for the apparatus. Set into the upper surface of the box are control buttons 8 and a small display screen 10. A handle 5 is secured to the top of the box 6.

The data processor is linked to or contains a memory or data storage device which may be of standard type. For example, the data storage may be provide by a combination of semiconductor RAM, ROM and erasable programmable read-only memory (EPROM), the EPROM memory serving to preserve the data in the absence of power. The processor is linked to a power supply and on/off switch, a number of output devices, a location device, the device for measuring the dynamic coefficient of friction of the underlying floor surface, a gloss meter 46 and optionally a micron profile meter (not shown). The processor is also connected to a USB port (not shown) or other data port so that data can be taken from or introduced into the data processor.

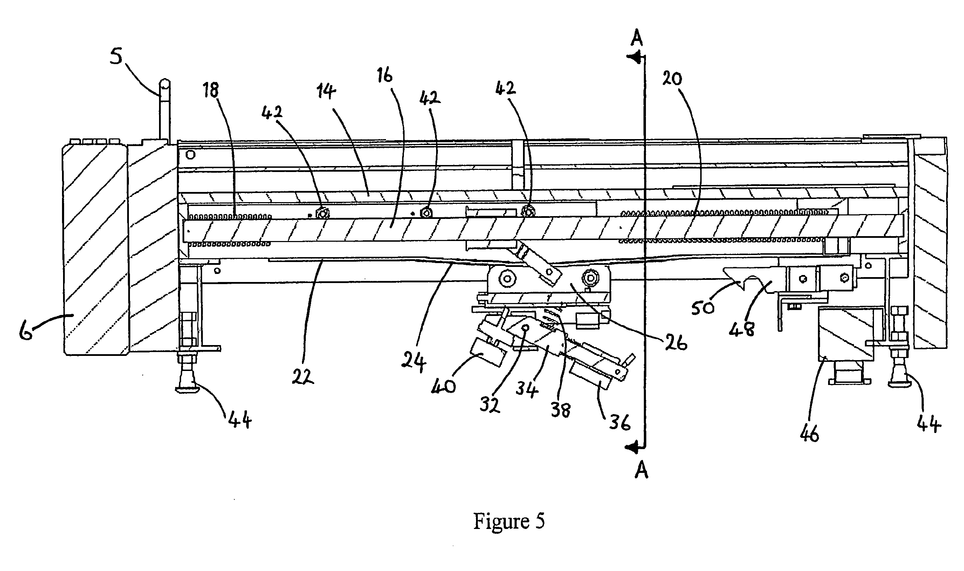

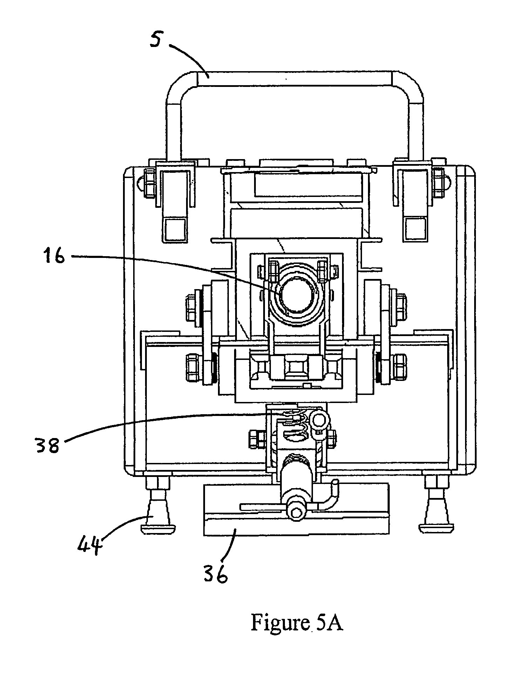

The interior workings of the apparatus are shown in Figures 5, 6, 7 and 8 which are side sectional elevations.

Within the housing 2 is a longitudinally extending frame member 14 having an inverted channel section, within which is disposed a bar 16 of circular cross section. A buffering spring 18 is mounted about the bar at one end thereof, and a propulsion spring 20 is mounted about the bar at the other end thereof. The frame member 14 is provided at its lower end with a laterally extending flange 22, which is substantially horizontal at either end but has a central portion 24, which is arcuate in shape. The flange 22 serves as a track upon which is mounted a carriage 26. Two pairs of rollers 28 and 30 serve to hold the carriage in place on the flange.

Attached by means of pivot mounting 32 to the lower part of the carriage is an arm 34, upon which is mounted a shoe 36. The arm 34 and hence the shoe 36 are biased in a downwards direction by means of biasing spring 38. An adjustment screw 40 allows for fine adjustment of the position of the arm 34 and shoe 36.

The shoe may be made from a variety of materials such as rubber and leather. In one preferred embodiment, however, the shoe is formed from the 4S grade or rubber described above.

The housing 2 is provided with adjustable feet, 44, which allow the housing, and hence the shoe 36, to be raised and lowered.

After manufacture and typically before despatching to a customer or end user, the apparatus is set up by calibrating with a pendulum tester, e.g. a standard pendulum tester. Thus, the adjustment screw 40 and adjustable feet 44 are adjusted so that the set-up corresponds to the set-up of the pendulum tester. After calibration, the adjustable feet 44 are typically locked against further adjustment before the device is sent out to the customer or end user.

Mounted just above the bar 16 are three infrared sensors 42, each consisting of a pair of elements, one of which is an infrared emitting LED and the other of which is an infrared optical transistor. In practice, an infrared beam is established between the LED and transistor, the beam being broken as the carriage is moved along the track. The time taken for the carriage to break each successive beam provides a means of measuring the velocity of the carriage as it moves along the track, and data from the three infrared sensors are conveyed to the controller in the box 6.

As an alternative to using infrared sensors and emitters, other electromagnetic radiation sensors and emitters could be used, for example UV or visible light emitters and sensors.

Located at one end of the housing is a gloss meter, 46, the output from which is conveyed to the data processor within box 6.

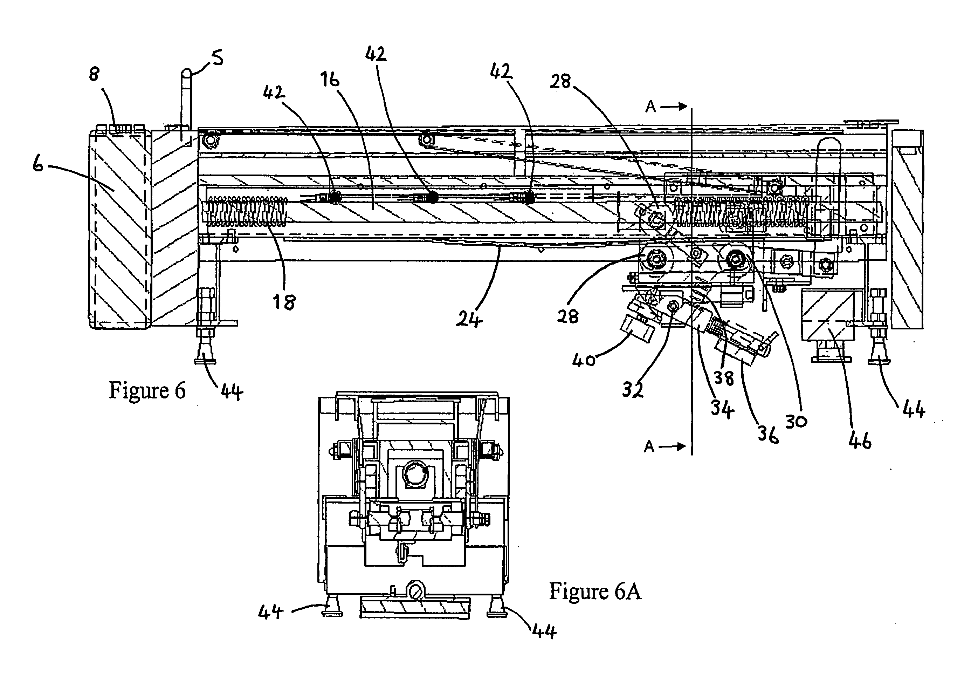

Figure 6 illustrates the apparatus in a 'loaded' configuration, with the spring 20 in a compressed state. The spring is retained in the compressed state by virtue of the carriage, which is held in place by latch 48. Latch 48 has a hooked latch portion 50 which engages a boss (not shown) on the carriage. A push rod 52 provides a means of releasing the latch.

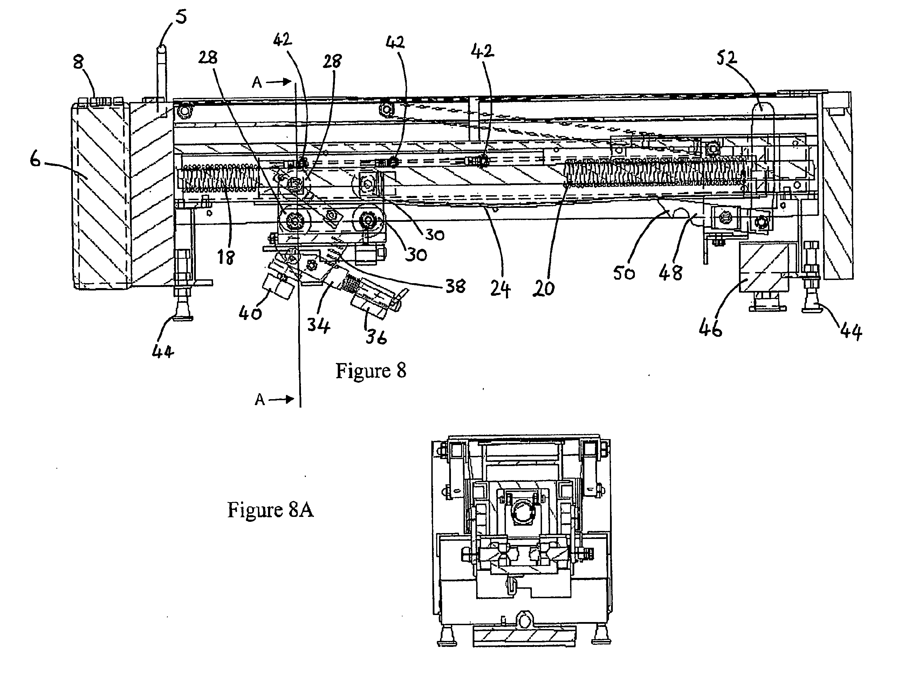

Figure 8 illustrates the apparatus after the push rod 52 has been depressed to release the force of the spring 20 to propel the carriage 26 along the track 22/24.

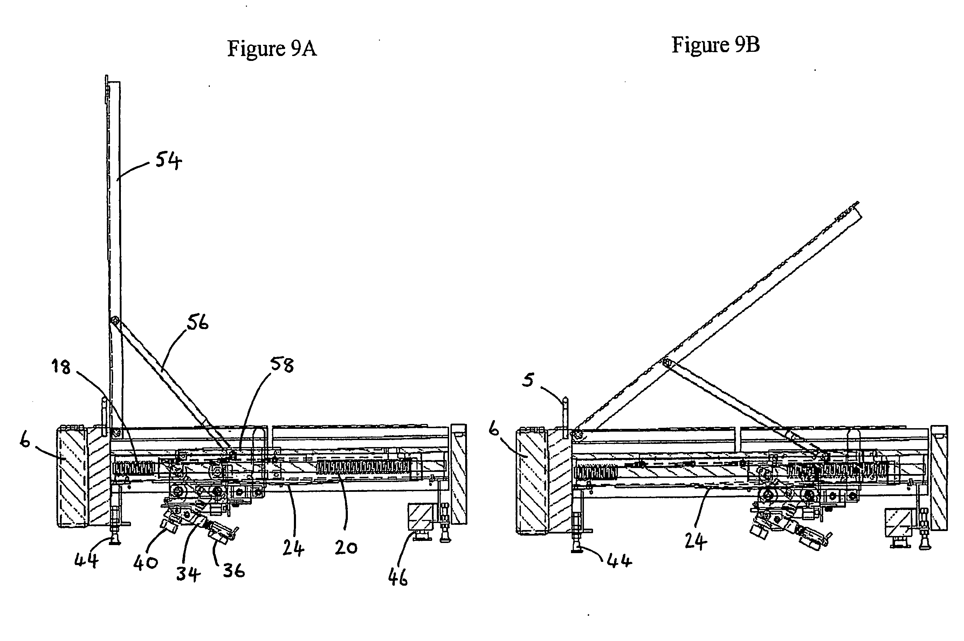

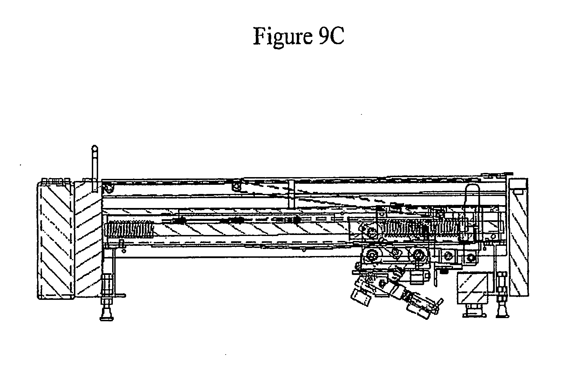

Figures 9A, 9B, and 9C illustrate the manner in which the propulsion spring 20 is compressed.

Firstly, lever arm 54 is lifted and this has the effect of moving the pivoting strut 56 and an associated slider 58 rearwardly, so that the slider engages the carriage 26. The lever arm is then pivoted towards the closed position as shown in Figure 9B, moving the slider 58 and carriage 26 into contact with the spring 20, thereby compressing the spring. When the lever arm 54 is fully depressed and is in the fully closed state, the spring is fully compressed and the carriage is held in place by means of the latch 48.

In order to use the apparatus, the push rod 52 is depressed thereby lifting the latch member 48 to release the carriage, which is then propelled along the track 22/24. As the carriage moves along the arcuate portion 24 of the track, the shoe 36 comes into contact with the surface, so that friction between the surface and the shoe has the effect of slowing down the movement of the carriage. The rate of deceleration of the carriage is measured by means of the infrared sensors 42. At the end of the track 22, the carriage is brought to a halt by means of the buffering spring 18.

The rate of deceleration of the carriage is a function of the dynamic coefficient of friction of the surface. Computer software in the data processor within the box is capable of converting the measured rates of deceleration of the carriage into coefficient of friction figures. The figures are then either transmitted to a remote device for reading out or are displayed on the display screen 10 on top of the box 6.

The coefficient of friction figures may be combined with readings from the gloss meter 46, to give an easily understood indication of the slip resistance of the floor.

The gloss meter 46 operates by directing a beam of light of a known strength onto the floor surface and then measuring the light reflected back from the floor. The results of the measurements are then relayed to the data processor.

The apparatus may also comprise a micron profile meter ("surface micro-roughness meter") (not shown) which measures the "peak-to-valley" distances of undulations in the floor surface at a number of points within a defined distance and then calculates the mean "peak-to-valley" distance. The measurement can be made using a 2 μm diamond-tipped stylus that follows the profile of the floor surface over a length of, for example, 12 mm, or the measurement can be made by an optical scanning method that involves measuring the peaks and valleys along a 12 mm linear path. An advantage of using the optical scanning method over the diamond tipped stylus method is that it does not involve contact with the floor and hence avoids the potential problem of the stylus becoming clogged or snagged on the surface. Whichever method is used, the micron profile meter conveys to the data processor information about the roughness of the surface.

Thus, the data processor receives measurements from the device for measuring the dynamic coefficient of friction, the gloss meter 46 and, when present, a micron profile meter. The results from each instrument are then compared with reference data. Depending on whether or not the results fall within predefined limits, a simple pass-fail message may be displayed on the display screen 10. Alternatively or additionally, a signal may be sent to an output device on the box which comprises red and green lights, red to indicate that the floor has failed the slip test, and green to indicate that the floor has passed the slip test

In a further alternative, a signal can also be sent to a second output on the box which comprises a printer (not shown) that can provide a print out of the measured parameters of the floor surface so that the reasons why the floor may have failed the slip test may be determined. A full set of data corresponding to the measurements made can be taken from the apparatus via a USB port (not shown) on the box.

A comparison of data obtained from a particular surface area can be compared with historical data for that area. The historical data can be held in the data storage facility within the apparatus or held at a remote location, e.g. a remote computer. Data can be conveyed to the remote location by cable, or wirelessly or by transfer using a suitable using a suitable data carrier. By comparing the current and historical data for a given area, the deterioration of the surface can be monitored thereby allowing it to be remedied before it reaches a hazardous state.

The advantage of the apparatus of the invention is that it allows the slipperiness of a floor surface to be measured quickly and simply by staff who have received only a minimum of training. For example, after a spillage in a supermarket, the floor may be mopped clean but there may still be traces of residue that could increase the slipperiness of a floor. Using the apparatus of the invention, the floor can be tested to see whether it is safe to allow members of the public to walk over it. In another example, the apparatus can be used routinely at daily, weekly or even at several times daily intervals to monitor the condition of the floor on an ongoing basis so that problems of floor deterioration and wear can be addressed before they reach a point at which the floor is hazardous.

An advantage of the apparatus shown in Figures 2 to 9C is its compact nature. The device is of lightweight construction and is portable in contrast to the more cumbersome pendulum tester devices. The apparatus can be easily carried under one arm and provide a simplified digital read-out indicative of the state of the surface.

## Equivalents

It will readily be apparent that numerous modifications and alterations may be made to the specific embodiments of the invention described above without departing from the principles underlying the invention. All such modifications and alterations are intended to be embraced by this application, within the limits defined by the scope of the claims.

Whatever arrangement is utilised for determining the COF of a floor surface, it will be appreciated that the results obtained will be such that a direct comparison may be deduced in relation to measurements made using the pendulum test instrument in accordance with BS 7976.

## Claims

1. A device for measuring the dynamic coefficient of friction of a surface, the device comprising;
   a track (22) having an arcuate portion which is shaped to mimic an arc of travel of a pendulum;
   a shoe (36) mounted so as to be movable along the track, and means for biasing part of the shoe into contact with the surface as it moves along the arcuate portion of the track;
   means (20) for providing an initial propulsion force to propel the shoe along the track;
   means (42) for measuring the velocity of the shoe at a plurality of points during its travel along the track; and
   computing means (6) for calculating the coefficient of friction from changes in velocity of the shoe as it moves along the track.

2. A device according to claim 1 wherein the means for providing an initial propulsion force comprises a compressed spring (20).

3. A device according to claim 1 or claim 2 wherein the part of the shoe (36) is biased into contact with the surface during its travel along the arcuate portion of the track by means of a biasing spring (38).

4. A device according to any one of the preceding claims wherein the part of the shoe (36) that is biased into contact with the surface is formed of rubber.

5. A device according to any one of the preceding claims wherein means (42) are provided for measuring the velocity of the shoe at three or more positions along the track.

6. A device according to claim 5 wherein means (42) are provided for measuring the velocity of the shoe at three positions along the track.

7. A device according to any one of claims 1 to 6 wherein the arcuate portion of the track (24) is formed by a rail or pair of substantially parallel rails upon which is mounted a carriage that carries the shoe.

8. A device according to claim 7 wherein the carriage is provided with one or more rollers or pairs of rollers (28, 30) that engage the track and allow the carriage to move along the track.

9. A device according to any one of claims 1 to 8 wherein the arcuate portion of the track has a substantially horizontal portion of track (22) adjoining one or both ends thereof.

10. Apparatus for determining the slip resistance of a floor surface at a plurality of locations on the floor surface, the apparatus comprising:

a location device for identifying and recording the location of the apparatus;
means for measuring one or more physical properties of the floor surface relevant to slip resistance at each location;
a data processor programmed to compare measured values for each of the said physical properties of the floor surface at each location with comparison data; and
an output device operatively linked to the data processor for informing a user of the apparatus whether the slip resistance of the floor at a given location is within acceptable limits;
wherein the means for measuring one or more physical properties of the floor surface comprises means for measuring the dynamic coefficient of friction of the floor surface; and the said means for measuring the dynamic coefficient of friction of the floor surface is a device as defined in any one of claims 1 to 6.

11. A method of monitoring the slip resistance of a floor surface at one or more locations on the floor surface, which method comprises using an apparatus according to any one of the preceding claims to:

(a) measure one or more physical properties of the floor surface relevant to slip resistance at each location;
(b) compare measured values for each of the said physical properties of the floor surface at each location with comparison data; and

(c) inform a user of the apparatus whether the slip resistance of the floor at a given location is within acceptable limits.

12. A method of measuring the dynamic coefficient of friction of a surface using a device as described in any one of claims 1 to 6; wherein the method comprises;
positioning the device on the surface;
imparting an initial propulsion force to the shoe to propel the shoe along the track;
measuring the velocity of the shoe at a plurality of points during its travel along the track; and
calculating the coefficient of friction from changes in velocity of the shoe as it moves along the track.

**Patentansprüche**

1. Vorrichtung zum Messen des dynamischen Reibungskoeffizienten einer Oberfläche, wobei die Vorrichtung Folgendes umfasst;
eine Bahn (22) mit einem bogenförmigen Abschnitt, der derart geformt ist, dass er den Bewegungsbogen eines Pendels imitiert;
einen Schuh (36), der derart angebracht ist, dass er entlang der Bahn beweglich ist, und ein Mittel zum Vorspannen eines Teils des Schuhs, dazu, die Oberfläche zu berühren, wenn er sich entlang dem bogenförmigen Abschnitt der Bahn bewegt;
Mittel (20) zum Bereitstellen einer Anfangsantriebskraft, um den Schuh entlang der Bahn anzutreiben;
Mittel (42) zum Messen der Geschwindigkeit des Schuhs an mehreren Stellen während seiner Bewegung entlang der Bahn; und
Berechnungsmittel (6) zum Berechnen des Reibungskoeffizienten aus Änderungen der Geschwindigkeit des Schuhs, wenn er sich entlang der Bahn bewegt.

2. Vorrichtung nach Anspruch 1, wobei das Mittel zum Bereitstellen einer Anfangsantriebskraft eine zusammengedrückte Feder (20) umfasst.

3. Vorrichtung nach Anspruch 1 oder Anspruch 2, wobei der Teil des Schuhs (36) mittels einer Vorspannfeder (38) während seiner Bewegung entlang dem bogenförmigen Abschnitt der Bahn dazu vorgespannt wird, die Oberfläche zu berühren.

4. Vorrichtung nach einem der vorangehenden Ansprüche, wobei der Teil des Schuhs (36), der dazu vorgespannt ist, die Oberfläche zu berühren, aus Gummi gebildet ist.

5. Vorrichtung nach einem der vorangehenden Ansprüche, wobei Mittel (42) zum Messen der Geschwindigkeit des Schuhs an drei oder mehr Positionen entlang der Bahn vorgesehen sind.

6. Vorrichtung nach Anspruch 5, wobei Mittel (42) zum Messen der Geschwindigkeit des Schuhs an drei Positionen entlang der Bahn vorgesehen sind.

7. Vorrichtung nach einem der Ansprüche 1 bis 6, wobei der bogenförmige Abschnitt der Bahn (24) von einer Schiene oder einem Paar im Wesentlichen paralleler Schienen gebildet ist, worauf ein Wagen angebracht ist, der den Schuh trägt.

8. Vorrichtung nach Anspruch 7, wobei der Wagen mit einer oder mehreren Rollen oder Paaren von Rollen (28, 30) ausgestattet ist, die mit der Bahn in Eingriff treten und zulassen, dass sich der Wagen entlang der Bahn bewegt.

9. Vorrichtung nach einem der Ansprüche 1 bis 8, wobei ein im Wesentlichen horizontaler Bahnabschnitt (22) an ein oder beide Enden des bogenförmigen Abschnitts der Bahn angrenzt.

10. Apparatur zum Bestimmen der Rutschsicherheit einer Fußbodenoberfläche an mehreren Orten auf der Fußbodenoberfläche, wobei die Apparatur Folgendes umfasst:

eine Ortsbestimmungsvorrichtung zum Identifizieren und Aufzeichnen des Orts der Apparatur; Mittel zum Messen einer oder mehrerer für die Rutschsicherheit relevanter physikalischer Eigenschaften der Fußbodenoberfläche an jedem Ort; einen Datenprozessor, der dazu programmiert ist, gemessene Werte für jede der genannten physikalischen Eigenschaften der Fußbodenoberfläche an jedem Ort mit Vergleichsdaten zu vergleichen; und eine Ausgabevorrichtung, die wirksam mit dem Datenprozessor verbunden ist, um einem Benutzer der Apparatur mitzuteilen, ob die Rutschsicherheit des Fußbodens an einem gegebenen Ort innerhalb zulässiger Grenzen liegt; wobei das Mittel zum Messen einer oder mehrerer physikalischer Eigenschaften der Fußbodenoberfläche Mittel zum Messen des dynamischen Reibungskoeffizienten der Fußbodenoberfläche umfasst; und es sich bei dem genannten Mittel zum Messen des dynamischen Reibungskoeffizienten der Fußbodenoberfläche um eine Vorrichtung nach einem der Ansprüche 1 bis 6 handelt.

11. Verfahren zum Überwachen der Rutschsicherheit einer Fußbodenoberfläche an einem oder mehreren Orten auf der Fußbodenoberfläche, wobei das Verfahren die Verwendung einer Apparatur nach einem der vorangehenden Ansprüche umfasst, um:

(a) eine oder mehrere für die Rutschsicherheit relevante physikalische Eigenschaften der Fußbodenoberfläche an jedem Ort zu messen; (b) gemessene Werte für jede der genannten physikalischen Eigenschaften der Fußbodenoberfläche an jedem Ort mit Vergleichsdaten zu vergleichen; und (c) einem Benutzer der Apparatur mitzuteilen, ob die Rutschsicherheit des Fußbodens an einem gegebenen Ort innerhalb zulässiger Grenzen liegt.

12. Verfahren zum Messen des dynamischen Reibungskoeffizienten einer Oberfläche unter Verwendung einer Vorrichtung nach einem der Ansprüche 1 bis 6, wobei das Verfahren Folgendes umfasst:

Positionieren der Vorrichtung auf der Oberfläche; Aufbringen einer Anfangsantriebskraft auf den Schuh, um den Schuh entlang der Bahn anzutreiben; Messen der Geschwindigkeit des Schuhs an mehreren Stellen während seiner Bewegung entlang der Bahn; und Berechnen des Reibungskoeffizienten aus Änderungen der Geschwindigkeit des Schuhs, wenn er sich entlang der Bahn bewegt.

**Revendications**

1. Dispositif de mesure du coefficient de frottement dynamique d'une surface, le dispositif comprenant :

une voie (22) comportant une portion arquée qui a une forme permettant de mimer un arc de parcours d'un pendule ; un patin (36) monté de façon à être mobile le long de la voie, et un moyen permettant de solliciter une partie du patin en contact avec la surface à mesure qu'il se déplace le long de la portion arquée de la voie ; un moyen (20) permettant de fournir une force de propulsion initiale pour propulser le patin le long de la voie ; des moyens (42) permettant de mesurer la vitesse du patin en une pluralité de points pendant son parcours le long de la voie ; et un moyen de calcul (6) permettant de calculer le coefficient de frottement à partir de changements de vitesse du patin à mesure qu'il se déplace le long de la voie.

2. Dispositif selon la revendication 1, dans lequel le moyen permettant de fournir une force de propulsion initiale comprend un ressort comprimé (20).

3. Dispositif selon la revendication 1 ou la revendication 2, dans lequel la partie du patin (36) est sollicitée en contact avec la surface pendant son parcours le long de la portion arquée de la voie au moyen d'un ressort de sollicitation (38).

4. Dispositif selon l'une quelconque des revendications précédentes, dans lequel la partie du patin (36) qui est sollicitée en contact avec la surface est formée de caoutchouc.

5. Dispositif selon l'une quelconque des revendications précédentes, dans lequel des moyens (42) sont prévus pour mesurer la vitesse du patin en trois positions ou plus le long de la voie.

6. Dispositif selon la revendication 5, dans lequel des moyens (42) sont prévus pour mesurer la vitesse du patin en trois positions le long de la voie.

7. Dispositif selon l'une quelconque des revendications 1 à 6, dans lequel la portion arquée de la voie (24) est formée par un rail ou une paire de rails sensiblement parallèles sur lequel est monté un chariot portant le patin.

8. Dispositif selon la revendication 7, dans lequel le chariot est pourvu d'un ou plusieurs rouleaux ou paires de rouleaux (28, 30) qui mettent en prise la voie et permettent au chariot de se déplacer le long de la voie.

9. Dispositif selon l'une quelconque des revendications 1 à 8, dans lequel la portion arquée de la voie a une portion sensiblement horizontale de voie (22) attenante à l'une de ses deux extrémités ou les deux.

10. Appareil de détermination de la résistance au glissement d'une surface de sol en une pluralité d'emplacements sur la surface du sol, l'appareil comprenant :

un dispositif de localisation permettant d'identifier et d'enregistrer l'emplacement de l'appareil ;
un moyen de mesure d'une ou plusieurs propriétés physiques de la surface du sol relatives à la résistance au glissement en chaque emplacement ;
un processeur de données programmé pour comparer des valeurs mesurées pour chacune desdites propriétés physiques de la surface du sol en chaque emplacement avec des données de comparaison ; et
un dispositif de sortie lié de manière opérationnelle au processeur de données pour informer un utilisateur de l'appareil si la résistance au glissement du sol en un emplacement donné est dans des limites acceptables ou non ;
dans lequel le moyen de mesure d'une ou plusieurs propriétés physiques de la surface du sol comprend un moyen de mesure du coefficient de frottement dynamique de la surface du sol ; et ledit moyen de mesure du coefficient de frottement dynamique de la surface du sol est un dispositif tel que défini dans l'une quelconque des revendications 1 à 6.

11. Procédé de surveillance de la résistance au glissement d'une surface de sol en un ou plusieurs emplacements de la surface du sol, lequel procédé comprend l'utilisation d'un appareil selon l'une quelconque des revendications précédentes pour :

(a) mesurer une ou plusieurs propriétés physiques de la surface du sol relatives à la résistance au glissement en chaque emplacement ;
(b) comparer des valeurs mesurées pour chacune desdites propriétés physiques de la surface du sol à chaque emplacement avec des données de comparaison ; et
(c) informer un utilisateur de l'appareil si la résistance au glissement du sol en un emplacement donné est dans des limites acceptables ou non.

12. Procédé de mesure du coefficient de frottement dynamique d'une surface utilisant un dispositif tel que décrit dans l'une quelconque des revendications 1 à 6, dans lequel le procédé comprend les étapes consistant à :

positionner le dispositif sur la surface ;
communiquer une force de propulsion initiale au patin pour propulser le patin le long de la voie ;
mesurer la vitesse du patin en une pluralité de points pendant son parcours le long de la voie ; et
calculer le coefficient de frottement à partir de changements de vitesse du patin à mesure qu'il se déplace le long de la voie.

Figure 1

Figure 2

Figure 3

Figure 4

Figure 5

EP 2 069 757 B1

Figure 5A

Figure 6

Figure 6A

EP 2 069 757 B1

Figure 7

Figure 7A

Figure 8

Figure 8A

EP 2 069 757 B1

Figure 9B

Figure 9A

Figure 9C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. ANDREW ; A. CUNNINGHAM.** *Measurement Science and Technology,* 1998, vol. 9, 1566-1570